# EUROPEAN PATENT APPLICATION

(11) **EP 4 368 679 A1**
(43) Date of publication of application: **15.05.2024**
(21) Application number: 22837519.2
(22) Date of filing: 27.06.2022
(51) Int. Cl.: C09D 183/04, C09D 183/06, C09D 7/61, G02B 1/14

(54) **COATING COMPOSITION**

(30) Priority: 06.07.2021 JP 2021112226
(71) Applicant: Sakai Chemical Industry Co., Ltd., Sakai-shi, Osaka 590-8502 (JP)
(72) Inventor: FUKUROI, Kappei, Sakai-shi, Osaka 590-0985 (JP); ONISHI, Kasumi, Sakai-shi, Osaka 590-0985 (JP); TAKETSUNA, Hirotaka, Sakai-shi, Osaka 590-0985 (JP); IEDA, Takuma, Sakai-shi, Osaka 590-0985 (JP); MORITA, Takanori, Sakai-shi, Osaka 590-0985 (JP)
(74) Representative: Cabinet Beau de Loménie
(86) International application number: PCT/JP2022/025465
(87) International publication number: WO 2023/282102

(57) **Abstract**

The present invention provides a composition for coating which is excellent in stability over time and exhibits excellent transparency when being formed into a coating film. The composition for coating contains a zirconium element-containing metal oxide (A), and a silane compound (B), wherein the zirconium element-containing metal oxide (A) has a zeta potential value as measured by the following method of 30 mV or higher:
<method of measuring the zeta potential> a 10-mass% zirconium element-containing metal oxide (A) water dispersion is measured at room temperature (25°C) by a laser doppler electrophoresis method.

## Description

### TECHNICAL FIELD

The present invention relates to a composition for coating, particularly to a composition for coating useful in an application to a lens of eyeglasses and the like.

### BACKGROUND ART

In recent years, plastic lenses have become the mainstream of eyeglass lenses, and in particular, high-refractive index lenses are becoming the center thereof. The situation behind this is that due to the increase of the visual acuity deterioration along with the spread of digital devices such as PC and smartphones, the demand of eyeglasses for correction has risen and light and thin (high-refractive index) lenses have come to be demanded on the market. In high-refractive index plastic lenses, however, in the case where the refractive index of a hard coat film applied in order to prevent scratches does not coincide with that of a lens to become a substrate, by interference of light, a rainbow pattern called interference fringes emerges, resulting in spoiling the beauty. Then, a technology of matching the refractive index of a hard coat film to that of a lens has been proposed.

For example, Patent Literature 1 proposes, as a composition to improve the refractive index of a hard coat film, microparticles in which iron oxide and silicon oxide are integrally bound in a form of a composite oxide or a solid solution to titanium oxide. The refractive index of a hard coat film using such microparticles is high and by regulating the blend amount of the microparticles, the hard coat film can be applied for lenses having various refractive indices. An eyeglass lens having an antireflection film applied on the upper layer of the hard film, however, causes blackening by ultraviolet rays and has a drawback of reducing the optical performance.

For the same purpose as in Patent Literature 1, Patent Literature 2 proposes composite microparticles composed of oxides of titanium, silicon, zirconium and/or aluminum. In the case of using the microparticles, however, although no blackening as seen in the above is caused, an eyeglass lens having no antireflection film applied thereon causes cracks and the like in its hard coat film due to the photocatalytic activity of titanium dioxide, posing a weatherability problem.

Patent Literature 3 proposes composite microparticles of rutile-type titanium oxide, zirconium oxide, silicon oxide and tin oxide. In the case of using the microparticles, although the weatherability described in the above is improved, an eyeglass lens having an antireflection film laminated thereon has a problem of discoloring to blue by ultraviolet rays. In the case of thus using microparticles whose main component is titanium oxide as a hard coat film component, there exists the problem with light resistance or weatherability. Then, a technology of using zirconium oxide microparticles is proposed (for example, see Patent Literature 4).

The system using zirconium oxide microparticles, though improving the weatherability as described above, is insufficient in transparency of a coating film and has a problem with stability over time as a coating liquid.

### CITATION LIST

### - Patent Literature

Patent Literature 1: JP H07-76671 A
Patent Literature 2: JP H08-48940 A
Patent Literature 3: JP 2006-251760 A
Patent Literature 4: JP 2009-155541 A

### SUMMARY OF INVENTION

### - Technical Problem

Although various compositions for coating are conventionally disclosed as described above, there is room for improvement in stability over time, and in the transparency when they are formed into coating films.

The present invention has been made in view of the above present situation, and an object is to provide a composition for coating which is excellent in stability over time and exhibits excellent transparency when being formed into a coating film.

### - Solution to Problem

As a result of various studies on a composition for coating, the present inventors have found that by combining a zirconium element-containing metal oxide having a zeta potential value as measured by a predetermined method of 30 mV or higher with a silane compound, the composition is excellent in stability over time, and exhibits excellent transparency when being formed into a coating film, and have conceived of successfully solving the above problem, leading to the present invention.

That is, the present invention is directed to a composition for coating containing a zirconium element-containing metal oxide (A) and a silane compound (B), wherein the zirconium element-containing metal oxide (A) has a zeta potential value as measured by the following method of 30 mV or higher.

### <Method of measuring the zeta potential>

A 10 mass%-zirconium element-containing metal oxide (A) water dispersion is measured at room temperature (25°C) by a laser doppler electrophoresis method.

The zirconium element-containing metal oxide (A) has an average primary particle diameter as measured by a dynamic light scattering method of preferably 1 to 20 nm.

The silane compound (B) is preferably a hydrolyzate of a compound represented by the following formula (1):

R¹R²ₐSi(OR³)₃₋ₐ ... (1)

wherein R¹ represents an alkyl group having 1 to 3 carbon atoms, a phenyl group, a vinyl group, an organic group having an epoxy group, an organic group having a (meth)acrylic group, an organic group having an amino group, or an organic group having a mercapto group; R² represents an alkyl group having 1 or 2 carbon atoms; R³ are identical or different and each represent an alkyl group having 1 to 3 carbon atoms; and a is 0 or 1.

The content proportion of the zirconium element-containing metal oxide (A) is preferably 4 to 25% by mass based on 100% by mass of the composition for coating.

The content proportion of the silane compound (B) is preferably 30 to 260% by mol based on 100% by mol of the zirconium element-containing metal oxide (A).

The composition for coating is preferably used in an application to a lens.

The present invention is also directed to a lens coated with the composition for coating.

### - Advantageous Effects of Invention

The composition for coating of the present invention, since being constituted of the above-mentioned constitution, and being excellent in stability over time and exhibiting excellent transparency when being formed into a coating film, can suitably be used for lenses and the like for eyeglasses and the like.

### DESCRIPTION OF EMBODIMENTS

Hereinafter, preferred embodiments of the present invention will be described specifically, but the present invention is not limited only to the following descriptions and may be suitably changed and applied in the scope of the present invention without changing the gist thereof. Then, combined embodiments of two or more of individual preferred embodiments of the present invention to be described below also come under preferred embodiments of the present invention.

The composition for coating of the present invention contains a zirconium element-containing metal oxide (A) having a zeta potential as measured by the method described above of 30 mV or higher.

Thereby, the dispersibility of the zirconium element-containing metal oxide (A) is improved and the composition for coating becomes excellent in the stability over time and can exhibit excellent transparency when being coated on lenses and the like. The composition for coating of the present invention is excellent also in the adhesion with a lens, and a lens obtained by coating this is excellent also in the scratch resistance and the weatherability.

The zeta potential of the zirconium element-containing metal oxide (A) is 30 mV or higher, but the zeta potential is preferably 35 mV or higher. When the zeta potential is 35 mV or higher, the operation and effect of the present invention can thereby be exhibited more sufficiently. The zeta potential is more preferably 40 mV or higher, still more preferably 45 mV or higher. The zeta potential of the zirconium element-containing metal oxide (A) is preferably 100 mV or lower.

The zirconium element-containing metal oxide (A) is not limited as long as containing a zirconium atom and an oxygen atom, and may contain elements other than the zirconium atom and the oxygen atom. The other elements are not limited, and include at least one stabilizing element selected from aluminum, magnesium, titanium and rare earth elements. Due to that the zirconium element-containing metal oxide (A) contains the above other elements, the thermal stability of the metal oxide (A) is more improved. Specific examples of the rare earth elements include yttrium.

The content of the above other elements in the zirconium element-containing metal oxide (A) is not limited, and is preferably 0 to 20% by mol, more preferably 0 to 10% by mol, still more preferably 0 to 5% by mol, based on 100% by mol of zirconium element.

The average primary particle diameter as measured by a dynamic light scattering method of the zirconium element-containing metal oxide (A) is not limited, and is preferably 1 to 20 nm, more preferably 1 to 15 nm, still more preferably 1 to 10 nm.

The zirconium element-containing metal oxide (A) may be surface-treated with an inorganic compound or an organic compound. Examples of the inorganic compound include silicon oxide and aluminum oxide. Examples of the organic compound include silane coupling agents, titanate coupling agents and phosphate esters. The silane coupling agent is preferably a compound represented by the above formula (1).

In the composition for coating, the content proportion of the zirconium element-containing metal oxide (A) is preferably 4 to 25% by mass based on 100% by mass of the composition for coating. By containing the zirconium element-containing metal oxide (A) in such proportion, the operation and effect of the present invention can thereby be exhibited more sufficiently. The content proportion thereof is more preferably 8 to 20% by mass.

A method for producing the zirconium element-containing metal oxide (A) is not limited, and examples thereof include a method of heating and hydrolyzing a zirconium salt aqueous solution (hydrolysis method), a method of adding an alkali to a zirconium salt aqueous solution to make zirconium hydroxide and peptizing the zirconium hydroxide (neutralization coprecipitation method) and a method of adding an acid and an alkali to zirconium hydroxide and thereafter subjecting the resultant to a hydrothermal treatment (hydrothermal synthesis method).

The method for producing the zirconium element-containing metal oxide (A) is preferably a method of carrying out a neutralization coprecipitation step of adding an alkali to an aqueous solution containing a zirconium salt to make a hydroxide and peptizing the hydroxide, and carrying out a hydrothermal step of adding an acid to a product obtained by the neutralization coprecipitation step and subjecting the resultant to a hydrothermal treatment.

The zirconium salt to be used in the above neutralization coprecipitation step is not limited as long as containing zirconium element, but is preferably a chloride, an oxychloride, a sulfate salt, a nitrate salt or the like, more preferably a chloride or an oxychloride. A zirconium compound to be used as a raw material in production of a slurry containing a zirconium element-containing compound includes a hydroxide, an oxyhydroxide, a chloride, a sulfide, a sulfate salt, a nitrate salt, a carbonate salt, a hydrogencarbonate salt, an acetate salt, a phosphate salt, an oxalate salt, a butyrate salt, a selenate salt, an iodate salt, a fluoride, and an oxychloride. Among these, preferable are an oxychloride, a chloride, a sulfate salt, a nitrate salt, an acetate salt and the like, which are water-soluble zirconium compounds suitable for production.

In the case where the zirconium element-containing metal oxide (A) contains elements other than a zirconium atom and an oxygen atom, it is preferable that salts of the other elements are added in the neutralization coprecipitation step. Examples of the salts of the other elements include chlorides, oxychlorides, sulfate salts, nitrate salts and acetate salts.

The alkali to be used in the neutralization coprecipitation step is not limited, and examples thereof include hydroxides of alkali metals or alkaline earth metals, such as sodium hydroxide, potassium hydroxide and calcium hydroxide; ammonia; and organic amines. Among these, preferable are hydroxides of alkali metals, such as sodium hydroxide and potassium hydroxide.

The amount of the alkali to be used in the neutralization coprecipitation step is not limited, and is preferably 10 to 1,000% by mol based on 100% by mol in total of zirconium element and the other elements.

The acid to be used in the above hydrothermal step is not limited, and includes inorganic acids such as nitric acid, hydrochloric acid and sulfuric acid; and organic acids such as acetic acid, tartaric acid, glutamic acid, malonic acid, maleic acid, trimellitic anhydride, succinic acid, malic acid, glycolic acid, alanine, fumaric acid, oxalic acid, glutaric acid and formic acid. Among these, organic acids are preferable and acetic acid is more preferable. By using acetic acid in the hydrothermal step, the zirconium element-containing metal oxide (A) having the zeta potential of 30 mV or higher can be obtained sufficiently.

The amount of the acid to be used in the hydrothermal step is not limited, and is preferably 50 to 1,000% by mol based on 100% by mol in total of zirconium element and the other elements. Thereby, the zirconium element-containing metal oxide (A) having the zeta potential of 30 mV or higher can be obtained sufficiently. The amount of the acid to be used is more preferably 100 to 500% by mol.

The hydrothermal temperature in the hydrothermal step is not limited, and is preferably 170 to 230°C, more preferably 175 to 220°C.

The hydrothermal treatment time in the hydrothermal step is not limited, and is preferably 1 to 10 hours, more preferably 1.5 to 6 hours.

The method for producing the zirconium element-containing metal oxide (A) preferably includes, after the neutralization coprecipitation step and/or the hydrothermal step, a washing step.

A washing method in the washing step is not limited, and the washing can be carried out by a conventionally used method. For example, after the neutralization coprecipitation step, a washing method using filtration, water washing or the like is preferable. Then, after the hydrothermal step, use of an ultrafiltration membrane or the like is preferable.

In the case of producing the zirconium element-containing metal oxide (A) by the above production method, since the product is obtained as a water dispersion, when the product is used for the composition for coating of the present invention, it is preferable that the water is displaced by an organic solvent.

The organic solvent is not limited as long as being excellent in miscibility with the silane compound (B), but examples thereof include ones having good compatibility with water, including alcohols such as methanol, ethanol and isopropanol; ketones such as acetone, methyl ethyl ketone and methyl isobutyl ketone; esters such as ethyl acetate, butyl acetate, ethyl lactate and propylene glycol monoethyl ether acetate; polyhydric alcohols and ethers thereof, such as ethylene glycol, ethylene glycol monomethyl ether, ethylene glycol monobutyl ether and propylene glycol monomethyl ether; and cyclic ethers such as dioxane and tetrahydrofuran. These may be used singly or in a combination thereof. Further, aromatic hydrocarbons, such as benzene and toluene, having good compatibility with these organic solvents can also suitably be used concurrently.

Among these, lower alcohols having 1 to 3 carbon atoms are desirable. Lower alcohols are high in the miscibility with water and the silane compound (B), and can easily replace a water dispersion type zirconium element-containing metal oxide (A) by an organic dispersion type zirconium element-containing metal oxide (A). The lower alcohols having 1 to 3 carbon atoms are preferable also in that they are lower in the risk of bringing about the environmental load than alcohols having more carbon atoms, and the solvent can be removed at a lower temperature in film forming.

The composition for coating of the present invention contains the silane compound (B).

The silane compound (B) is not limited, and is preferably a hydrolyzate of an alkoxysilane compound, more preferably a compound represented by the following formula (1) :

R¹R²ₐSi(OR³)₃₋ₐ ... (1)

wherein R¹ represents an alkyl group having 1 to 3 carbon atoms, a phenyl group, a vinyl group, an organic group having an epoxy group, an organic group having a (meth)acrylic group, an organic group having an amino group or an organic group having a mercapto group; R² represents an alkyl group having 1 or 2 carbon atoms; R³ are identical or different and each represent an alkyl group having 1 to 3 carbon atoms; and a is 0 or 1.

These silane compounds are compounds which can be hydrolyzed and have a silanol group high in the reactivity, and simultaneously have an organic group. This is a factor to impart firm adhesion and scratch resistance to a hard coat film interposed between a plastic lens (organic material) and an antireflection film (inorganic material), and is excellent also in the dispersibility with the zirconium oxide microparticles, and imparts high transparency to the hard coat film. In the case of intending to impart higher scratch resistance to the hard coat film, also effective is addition of a silane compound represented by the following formula (2):

Si(OR⁴)₄ ... (2)

wherein R⁴ are identical or different, and each represent an organic group having 1 to 4 carbon atoms, and/or a disilane compound represented by the following formula (3):

X¹₃₋ₘ-Si(R⁵ₘ)-Y-Si(R⁶ₘ)-X²₃₋ₘ ... (3)

wherein R⁵ and R⁶ are identical or different, and each represent a hydrocarbon group having 1 to 6 carbon atoms; X¹ and X² each represent a hydrolyzable group; Y represents an organic group containing a carbonate group or an epoxy group; and m is 0 or 1.

The above organic group having an epoxy group specifically includes glycidoxyalkyl groups having 3 to 10 carbon atoms, such as a 3-glycidoxypropyl group and a 4-glycidoxybutyl group, and epoxyalkyl groups having 3 to 10 carbon atoms, such as a 2-(3,4-epoxycyclohexyl)ethyl group, a 3-(3,4-epoxycyclohexyl)propyl group, a 3,4-epoxybutyl group and a 7,8-epoxyoctyl group.

a in the above formula (1) is 0 or 1 and preferably 0.

The above organic group having a (meth)acrylic group specifically includes (meth)acryloxyalkyl groups having 3 to 10 carbon atoms, such as a methacryloxypropyl group and an acryloxypropyl group.

The above organic group having an amino group specifically includes aminoalkyl groups having 1 to 10 carbon atoms, such as an aminomethyl group, an aminoethyl group and an aminopropyl group, and aminoaryl groups having 6 to 10 carbon atoms, such as an N-phenyl-aminopropyl group.

The above organic group having a mercapto group specifically includes mercaptoalkyl groups having 1 to 10 carbon atoms, such as a mercaptopropyl group.

The above R¹ is preferably an organic group having an epoxy group.

The compound represented by the above formula (1) specifically includes methyltrimethoxysilane, ethyltriethoxysilane, methyltriethoxysilane, phenyltriethoxysilane, dimethyldimethoxysilane, phenylmethyldimethoxysilane, vinyltrimethoxysilane, vinyltriethoxysilane, vinyltris(β-methoxyethoxy)silane, γ-glycidoxypropyltrimethoxysilane, γ-glycidoxypropyltriethoxysilane, γ-glycidoxypropylmethyldimethoxysilane, γ-glycidoxypropylmethyldiethoxysilane, β-(3,4-epoxycyclohexyl)ethyltrimethoxysilane, γ-methacryloxypropyltrimethoxysilane, N-β-(aminoethyl)γ-aminopropyltrimethoxysilane, N-β-(aminoethyl)y-aminopropylmethyldimethoxysilane, γ-aminopropyltriethoxysilane, N-phenyl-γ-aminopropyltrimethoxysilane and γ-mercaptopropyltrimethoxysilane.

The compound represented by the above formula (1) is preferably γ-glycidoxypropyltrimethoxysilane, γ-glycidoxypropyltriethoxysilane, γ-glycidoxypropylmethyldimethoxysilane, γ-glycidoxypropylmethyldiethoxysilane or β-(3,4-epoxycyclohexyl)ethyltrimethoxysilane, more preferably γ-glycidoxypropyltrimethoxysilane.

Then, it is preferable that these silane compounds are previously hydrolyzed or partially hydrolyzed and then used. A hydrolysis method may be a method of mixing the silane compound and water to carry out hydrolysis, in the presence of an acid catalyst, or a method of carrying out hydrolysis after an organic solvent such as an alcohol is mixed in order to carry out homogeneous hydrolysis, or may involve carrying out hydrolysis after mixing of the above zirconium oxide microparticles. The acid catalyst to be used for the hydrolysis includes dilute hydrochloric acid, dilute sulfuric acid, phosphoric acid, acetic acid and formic acid. Among these, dilute hydrochloric acid, acetic acid and formic acid are preferable. As the organic solvent, used are alcohols such as methanol, ethanol, isopropanol and butanol, and besides, ethylene glycol monomethyl ether, ethylene glycol monobutyl ether and propylene glycol monomethyl ether; among these, methanol, ethanol, isopropanol and propylene glycol monomethyl ether are preferable in use.

The content of the silane compound represented by the above formula (1) in the composition for coating is, in terms of solid content in the hard coat film obtained, preferably in the range of 25 to 75% by mass, more preferably in the range of 30 to 70% by mass. When the content of the silane compound in the hard coat film is 25% by mass or higher, the decrease in the adhesion with a plastic substrate or a primer film can sufficiently be suppressed and the zirconium oxide microparticles and other components can be stuck firmly in the hard coat film; and scratching due to a strong rubbing stress being applied on a lens for eyeglasses can sufficiently be suppressed. When the content of the silane compound in the hard coat film is 75% by mass or lower, the refractive index of the hard coat film can be improved more.

Further, in the case where the scratch resistance is intended to be further imparted to the hard coat film, as described above, addition of the (di)silane compounds represented by the above formulae (2) and (3) is also effective.

Specific examples of the silane compound represented by the formula (2) include tetramethoxysilane, tetraethoxysilane, tetrapropoxysilane and tetrabutoxysilane.

The disilane compound represented by the formula (3) can be synthesized by a conventionally known method, and can be obtained, for example, by addition reacting diallyl carbonate with trichlorosilane or the like, and thereafter alkoxylating the resultant, or by addition reacting a compound containing additionable substituents on both terminals and an epoxidizable functional group internally with trichlorosilane or the like, and thereafter alkoxylating the resultant.

These (di)silane compounds, since being concurrently used with the silane compound represented by the above formula (1), are suitably selected according to characteristics thereof. These silane compounds may be used singly or concurrently in two or more kinds.

The total blend amount of the (di)silane compounds represented by the above formulae (2) and (3) is, per 1 part of the silane compound represented by the above formula (1), preferably in the range of 0.05 to 0.3 part, more preferably 0.1 to 0.25 part. When the blend amount of the (di)silane compounds represented by the formulae (2) and (3) is 0.05 part or larger, the scratch resistance of the hard coat film is improved more; and when 0.3 part or smaller, it can sufficiently be suppressed that the water resistance of the hard coat film is decreased and cracks are generated in curing of the hard coat film.

In the composition for coating, the content proportion of the silane compound (B) is, preferably 30 to 260% by mol based on 100% by mol of the zirconium element-containing metal oxide (A). Thereby, the effect of the present invention can more sufficiently be exhibited. The content proportion of the silane compound (B) is more preferably 50 to 215% by mol, still more preferably 70 to 150% by mol, particularly preferably 80 to 110% by mol.

Also in the case where the silane compound represented by the formula (1) is used concurrently with the (di)silane compounds represented by the formulae (2) and (3), the preferable range of the total amount of these silane compounds is as described above; and by making thus the blend proportions, the hard coat film having a refractive index in the range of 1.56 to 1.67 can be fabricated.

The composition for coating may contain other components other than the zirconium element-containing metal oxide (A) and the silane compound (B).

The content proportion of the other components are not limited, and examples thereof include solvents, curing agents or curing catalysts, surfactants, ultraviolet absorbers and antioxidants. Besides, for the purpose of improving adhesion and dyeability, other thermosetting resins, such as melamine resins, urea resins, epoxy resins and phenol resins, can also be used concurrently. The content proportion of the other components is preferably 0 to 30% by mass, more preferably 0 to 20% by mass, still more preferably 0 to 10% by mass, particularly preferably 0 to 5% by mass, based on 100% by mass of the composition for coating.

The above other components are not limited, and examples thereof include solvents, curing catalysts, surfactants, dispersants, ultraviolet absorbers, antioxiadants and disperse dyes.

The solvents include water and the above-mentioned organic solvents.

The curing catalysts are not limited, and examples thereof include amines, amino acids, metal acetylacetonates, organic acid metal salts, perchloric acid, perchlorate salts, acids, inorganic acids, organic acids and metal chlorides. The curing catalyst is preferably an aluminum chelate, a tin chelate or an iron chelate.

As the surfactant, usable are any of anionic, cationic, nonionic and amphoteric ones, but preferable surfactants are nonionic ones.

Then, for improvement of the light resistance of the hard coat film, addition of a benzophenone-based ultraviolet absorber, a benzothiazole-based ultraviolet absorber, a hindered amine-based light stabilizer or the like is also possible.

Further for the purposes such as improvement of the dyeability of a coating film, addition of a polyfunctional epoxy resin, a polyvinylbutyral resin or the like is also possible.

A coating method for forming the hard coat film is not limited, and a publicly known method can be used, such as a dipping method, a spin coat method, a flow coat method or a spray method. A hard coat layer applied on the surface of a lens for eyeglasses by using such a method is thereafter cured by thermal energy (heat transfer, convection, radiation). The curing condition, for example, in the case of carrying out curing in a thermal environment of hot air convection, is preferably a treatment at an atmosphere temperature of 80°C to 130°C for 1 to 5 hours.

As the material of lenses for eyeglasses, commercially available are aliphatic allyl carbonate resins, polyamide resins, polyurea resins, methacrylate resins, aromatic allyl carbonate resins, polycarbonate resins, polyurethane resins, polythiourethane resins and episulfide resins; and these can suitably be used.

The composition for coating of the present invention can suitably be used for coating or the like of an optical plastic of a lens or the like.

The present invention is also directed to a method of coating the composition for coating on an optical plastic of a lens or the like.

The present invention is also directed to a method of using the composition for coating on an optical plastic of a lens or the like, and using the resultant.

The present invention is further also directed to a lens coated with the composition for coating.

The above lens is not limited as long as being a lens coated with the composition for coating, but it is preferable that a primer film is provided on the substrate of the lens and a hard coat film containing the composition for coating is applied on the outer layer of the primer film.

It is preferable that the lens is provided further with an antireflection film laminated.

The refractive index of the lens is preferably 1.55 to 1.70, more preferably 1.56 to 1.67.

The haze as measured by a haze meter of the lens is preferably 0.5% or lower, more preferably 0.3% or lower.

The lens is used, though not limited to, preferably in applications to eyeglasses.

An embodiment in which the lens is a lens for eyeglasses is one of preferred embodiments of the present invention.

### EXAMPLES

The present invention will be described in more detail hereinafter by way of Examples, but the present invention is not limited only to these Examples.

### <Evaluation of physical properties>

By the following procedures, obtained zirconium element-containing metal oxides (A) and obtained compositions for coating were evaluated for physical properties and the like.
(1) The average primary particle diameter of zirconium element-containing metal oxide particles
   D50 was measured by using a dynamic light scattering method (UPA-UT, manufactured by Nikkiso Co. Ltd.).
   The average primary particle diameter was measured by using a TEM (transmission electron microscope) under the following condition.

   Measuring instrument: a field emission transmission electron microscope JEM-2100F, manufactured by JEOL Ltd.
   Accelerating voltage: 200 kV
   Magnification: 250,000 times or 500,000 times
(2) The zeta potential of zirconium element-containing metal oxide particles
   The zeta potential was measured by a laser doppler electrophoresis method using an SZ-100 (manufactured by Horiba Ltd.). A water dispersion obtained in Examples and Comparative Examples each was partially collected and diluted with ion-exchange water to be adjusted to 20 g of a 10-mass% zirconium element-containing metal oxide (A) water dispersion, and used as a measuring sample.
(3) The total light transmittance, and haze of lenses after a hard coat film treatment
   The total light transmittance and the haze of lenses obtained were measured by a haze meter (NDH4000, manufactured by Nippon Denshoku Industries Co. Ltd.).
(4) The adhesion test of lenses after the hard coat film treatment
   Incisions were formed at intervals of 1 mm on the surface of a lens obtained by using a knife to form 100 squares of 1 square mm size; a pressure-sensitive adhesive cellophane tape was strongly pressed upon; thereafter, the tape was rapidly pulled to the 90° direction to the inplane direction of the plastic lens substrate; this operation was carried out 10 times in total; and the number of squares exhibiting no peeling was counted and the evaluation was made based on the following criteria.
   Good: the number of squares exhibiting no peeling was 95 or more
   Poor: the number of squares exhibiting no peeling was less than 95
(5) The scratch resistance test of lenses after the hard coat film treatment
   The surface of a lens obtained was rubbed with a steel wool #0000 with a load of 600 g applied under the condition of 30 reciprocations/100 sec in a distance of 3 cm; thereafter, the degree of scratching was visually judged and evaluated based on the following criteria.
   Good: almost no scratches were observed
   Average: some scratches were observed
   Poor: scratches were considerably observed
(6) The weatherability test of lenses after the hard coat film treatment
   A lens obtained was subjected to an exposure test using a xenon weatherometer (manufactured by Suga Test Instruments Co. Ltd.); and thereafter, check of cracks and the same test as the above adhesion test were carried out, and the evaluation was made based on the following criteria. Here, the test was carried out by setting the exposure time at 40 hours.

### (Appearance)

Good: no change in the appearance was observed
Poor: cracks were generated

### (Adhesion)

Good: the number of squares exhibiting no peeling was 95 or more
Poor: the number of squares exhibiting no peeling was less than 95

### (Example 1)

### (I) Preparation of a water dispersion of zirconium element-containing metal oxide particles having a zeta potential of 30 mV or higher

90 L of a mixed aqueous solution of zirconium oxychloride of 0.6 mol/L in concentration and yttrium chloride of 0.03 mol/L in concentration, and 68 L of a sodium hydroxide aqueous solution of 1.9 mol/L in concentration were prepared. In a precipitation reactor previously filled with 82 L of pure water, the mixed aqueous solution of zirconium oxychloride and yttrium chloride and the sodium hydroxide aqueous solution were simultaneously poured to cause the zirconium oxychloride and the yttrium chloride to coprecipitate by simultaneous neutralization, to thereby obtain a first water slurry of particles of the coprecipitate of zirconium oxide and yttrium oxide. The first water slurry was filtered and washed, and repulped with pure water so that the solid content rate became 11% by weight in terms of zirconium oxide and yttrium oxide, to thereby obtain 60 L of a second water slurry. The electroconductivity of the second water slurry was 70 µS/cm. 4.2 kg (1.3 parts by mol based on 1 part by mol of the total amount of zirconium and yttrium in the slurry) of acetic acid was added to the second water slurry, and subjected to hydrothermal treatment at 190°C for 3 hours to thereby obtain a transparent water dispersion. The transparent dispersion was washed and concentrated by an ultrafilter membrane to thereby obtain a water dispersion of zirconium element-containing metal oxide particles wherein the content rate of the zirconium element-containing metal oxide particles, which were solid solutions containing 4.8% by mol of yttrium, was 30% by weight.

The thus obtained water dispersion of zirconium element-containing metal oxide particles had a total light transmittance of 90% and a viscosity at 25°C of 6 mPa·s.

Then, water was removed from the obtained water dispersion of zirconium element-containing metal oxide particles, and obtained zirconium element-containing metal oxide particles were dried. The obtained zirconium element-containing metal oxide particle powder was observed by a TEM (transmission electron microscope) and the average primary particle diameter of the zirconium element-containing metal oxide particles was 3 nm.

On the other hand, the dispersed particle diameter D50 of the zirconium element-containing metal oxide particles in the water dispersion of zirconium element-containing metal oxide particles was 3 nm. Therefore, in the obtained water dispersion of zirconium element-containing metal oxide particles, it was found that almost no agglomeration of the zirconium element-containing metal oxide particles occurred.

Further, the zeta potential of the obtained water dispersion of zirconium element-containing metal oxide particles was measured and was confirmed to be 60 mV.

### (II) Preparation of a methanol dispersion of zirconium element-containing metal oxide particles having a zeta potential of 30 mV or higher

10 kg of the water dispersion of zirconium element-containing metal oxide particles obtained in the above (I) was concentrated by using an ultrafilter membrane; by charging methanol in an amount equivalent to an amount of an obtained filtrate in the concentrated dispersion thus obtained, the concentration of the dispersion and the dilution with methanol were carried out continuously and parallelly, whereby while the content rate of the zirconium element-containing metal oxide particles in the dispersion was kept at 30% by weight, with regard to the disperse medium of the dispersion, water was replaced by methanol and there was obtained a zirconium element-containing metal oxide particle methanol dispersion having a content rate of the zirconium element-containing metal oxide particles of 30% by weight. At this time, the methanol used for the dilution was 90 L. The thus obtained methanol dispersion of the zirconium element-containing metal oxide particles had a total light transmittance of 90% and a viscosity at a temperature of 25°C of 2 mPa·s.

### (III) Preparation of a hard coating liquid containing zirconium element-containing metal oxide particles having a zeta potential of 30 mV or higher

52.3 g of methyl alcohol and 16.0 g of a dilute hydrochloric acid (0.1 N) were dropwise charged in 69.7 g of γ-glycidoxypropyltrimethoxysilane over 48 hours to carry out hydrolysis. There were added 45.3 g of propylene glycol monomethyl ether, 115.1 g of the zirconia methanol dispersion (zirconium oxide concentration: 30% by weight, average particle diameter: 3 nm) prepared in (II), 1.40 g of tris(2,4-pentadionato)aluminum(III) as a curing catalyst, and 0.11 g of Ftergent 222F (manufactured by Neos Co. Ltd.) as a surfactant; and the resultant was stirred for 24 hours to thereby prepare a hard coat composition coating material (hard coating liquid) having a refractive index of 1.60. The proportion of the zirconium element-containing metal oxide in the hard coating liquid was 11.5% by mass and the proportion of the hydrolyzate of the γ-glycidoxypropyltrimethoxysilane to the zirconium element-containing metal oxide was 106% by mol.

### (IV) A lens coat

The hard coating solution prepared in (III) was dropped on a lens substrate and was made even on the lens surface while the lens was tilted in all directions. Thereafter, the lens coated with the hard coating liquid was cured by a drier in an atmosphere of 120°C for 3 hours to thereby obtain a lens having a hard coating film.

### (Example 2)

### (I) Preparation of a water dispersion of zirconium element-containing metal oxide particles having a zeta potential of 30 mV or higher

0.76 L of a zirconium oxychloride aqueous solution of 0.6 mol/L in concentration, and 0.53 L of a sodium hydroxide aqueous solution of 1.7 mol/L in concentration were prepared. In a precipitation reactor previously filled with 0.74 L of pure water, the zirconium oxychloride aqueous solution and the sodium hydroxide aqueous solution were simultaneously poured to cause the zirconium oxychloride to be neutralized, to thereby obtain a slurry of zirconium element-containing metal oxide particles. The obtained slurry was filtered and washed, and repulped with pure water so that the zirconium oxide content rate in the slurry became 5.6% by weight to thereby obtain 1 L of a slurry. The electroconductivity of the slurry was 258 µS/cm. 82.2 g (3 parts by mol based on 1 part by mol of zirconium in the slurry) of acetic acid was added to the slurry, and subjected to hydrothermal treatment at 200°C for 3 hours to thereby obtain a translucent dispersion. The translucent dispersion was washed by an ultrafilter membrane to thereby obtain a zirconium element-containing metal oxide dispersion C having a content rate of zirconium oxide of 30% by weight.

The thus obtained water dispersion of zirconium element-containing metal oxide particles had a total light transmittance of 75% and a viscosity at a temperature of 25°C of 4 mPa·s.

Then, water was removed from the obtained water dispersion of zirconium element-containing metal oxide particles, and obtained zirconium element-containing metal oxide particles were dried. The obtained zirconium element-containing metal oxide particle powder was observed by a TEM (transmission electron microscope) and the average primary particle diameter of the zirconium element-containing metal oxide particles was 8 nm.

On the other hand, the dispersed particle diameter D50 of the zirconium element-containing metal oxide particles in the water dispersion of zirconium element-containing metal oxide particles was 8 nm. Therefore, in the obtained water dispersion of zirconium element-containing metal oxide particles, it was found that almost no agglomeration of the zirconium element-containing metal oxide particles occurred.

Further, the zeta potential of the obtained water dispersion of zirconium element-containing metal oxide particles was measured and was confirmed to be 45 mV.

### (II) Preparation of a methanol dispersion of zirconium element-containing metal oxide particles having a zeta potential of 30 mV or higher

A methanol dispersion of zirconium element-containing metal oxide particles having a zeta potential of 30 mV or higher was prepared by the same method as in (II) of Example 1, except for using the water dispersion of zirconium element-containing metal oxide particles obtained in (I) of Example 2.

### (III) Preparation of a hard coating liquid containing zirconium element-containing metal oxide particles having a zeta potential of 30 mV or higher

A hard coating liquid containing zirconium element-containing metal oxide particles having a zeta potential of 30 mV or higher was prepared by the same method as in (III) of Example 1, except for using the methanol dispersion prepared in (II) of Example 2.

### (IV) A lens coat

A lens having a hard coating film was prepared by the same method as in (IV) of Example 1, except for using the hard coating liquid fabricated in the above (III).

### (Comparative Example 1)

### (I) Preparation of a water dispersion of zirconium element-containing metal oxide particles having a zeta potential of lower than 30 mV

0.76 L of a mixed aqueous solution of zirconium oxychloride of 0.6 mol/L in concentration and yttrium chloride of 0.03 mol/L in concentration, and 0.53 L of a sodium hydroxide aqueous solution of 1.9 mol/L in concentration were prepared. In a precipitation reactor previously filled with 0.74 L of pure water, the mixed aqueous solution of zirconium oxychloride and yttrium chloride and the sodium hydroxide aqueous solution were simultaneously poured to cause the zirconium oxychloride and the yttrium chloride to coprecipitate by simultaneous neutralization, to thereby obtain a slurry of particles of the coprecipitate of zirconium oxide and yttrium oxide. The obtained slurry was filtered and washed, and repulped with pure water so that the solid content rate of the slurry became 5.6% by weight in terms of zirconium oxide and yttrium oxide, to thereby obtain 1 L of a slurry. The electroconductivity of the slurry was 235 µS/cm. 140.8 g (1 part by mol based on 1 part by mol of the total amount of zirconium and yttrium in the slurry) of sodium citrate dihydrate was added to the slurry, and subjected to hydrothermal treatment at 200°C for 3 hours to thereby obtain a translucent dispersion. The translucent dispersion was washed and concentrated by an ultrafilter membrane to thereby obtain a water dispersion of zirconium element-containing metal oxide particles, wherein the content rate of the zirconium element-containing metal oxide particles, which were solid solutions containing yttrium, was 30% by weight.

The thus obtained water dispersion of zirconium element-containing metal oxide particles had a total light transmittance of 80% and a viscosity at a temperature of 25°C of 4 mPa·s.

Then, water was removed from the obtained water dispersion of zirconium element-containing metal oxide particles, and obtained zirconium element-containing metal oxide particles were dried. The obtained zirconium element-containing metal oxide particle powder was observed by a TEM (transmission electron microscope) and the average primary particle diameter of the zirconium element-containing metal oxide particles was 6 nm.

On the other hand, the dispersed particle diameter D50 of the zirconium element-containing metal oxide particles in the water dispersion of zirconium element-containing metal oxide particles was 6 nm. Therefore, in the obtained water dispersion of zirconium element-containing metal oxide particles, it was found that almost no agglomeration of the zirconium element-containing metal oxide particles occurred.

Further, the zeta potential of the obtained water dispersion of zirconium element-containing metal oxide particles was measured and was confirmed to be -41 mV.

### (II) Preparation of a methanol dispersion of zirconiumcontaining metal oxide particles having a zeta potential of lower than 30 mV

A methanol dispersion of zirconium element-containing metal oxide particles having a zeta potential of lower than 30 mV was prepared by the same method as in (II) of Example 1, except for using the water dispersion of zirconium element-containing metal oxide particles obtained in (I) of Comparative Example 1.

### (III) Preparation of a hard coating liquid containing zirconium element-containing metal oxide particles having a zeta potential of lower than 30 mV

A hard coating liquid containing zirconium element-containing metal oxide particles having a zeta potential of lower than 30 mV was prepared by the same method as in (III) of Example 1, except for using the methanol dispersion prepared in (II) of Comparative Example 1.

### (IV) A lens coat

A lens having a hard coating film was obtained by the same method as in (IV) of Example 1, except for using the hard coating liquid fabricated in (III) of Comparative Example 1.

### (Comparative Example 2)

A hard coating liquid having a refractive index of 1.60 was prepared by using a water dispersion of zirconia of 10 nm in particle diameter (manufactured by Daiichi Kigenso Kagaku Kogyo Co. Ltd., zirconium oxide concentration: 20% by weight) by referring to JP 5196993 B. A lens having a hard coating film was obtained by using the obtained hard coat liquid and by the same method as in (IV) of Example 1. The zeta potential of the zirconia water dispersion was measured and was confirmed to be -61 mV.

### (Comparative Example 3)

### (I) Preparation of a water dispersion of zirconium element-containing metal oxide particles having a zeta potential of a positive value and lower than 30 mV

170. 5 g of caustic potash of 0.5% by weight in concentration was added to 339.7 g of the water dispersion of zirconium element-containing metal oxide particles obtained in (I) of Example 1, and adjusted to a pH of 5.3.

The zeta potential of the obtained water dispersion of zirconium element-containing metal oxide particles was measured and was confirmed to be 28 mV.

### (II) Preparation of a methanol dispersion of zirconiumcontaining metal oxide particles having a zeta potential of a positive value and lower than 30 mV

A methanol dispersion of zirconium element-containing metal oxide particles having a zeta potential of a positive value and lower than 30 mV was prepared by the same method as in (II) of Example 1, except for using the water dispersion of zirconium element-containing metal oxide particles obtained in (I) of Comparative Example 3.

### (III) Preparation of a hard coating liquid containing zirconium element-containing metal oxide particles having a zeta potential of a positive value and lower than 30 mV

A hard coating liquid containing zirconium element-containing metal oxide particles having a zeta potential of a positive value and lower than 30 mV was prepared by using the methanol dispersion prepared in the above (II) and by the same method as in (III) of Example 1.

### (IV) A lens coat

A lens having a hard coating film was obtained by using the hard coating liquid prepared in the above (III) and by the same method as in (IV) of Example 1.

In Table 1, there are shown measurement results of physical properties and the like of the zirconia sols, the hard coating liquids and the lenses having a hard coating film obtained in Examples 1 and 2 and Comparative Examples 1 to 3.

**[Table 1]**

| | | | Example 1 | Example 2 | Com parative Example 1 | Com parative Example 2 | Com parative Example 3 |
|---|---|---|---|---|---|---|---|
| Zirconia sol physical properties | Water dispersion | Zeta potential | positive | positive | negative | negative | positive |
| | Zeta potential value | | 60 | 45 | -41 | -61 | 28 |
| | Particle diameter | (nm) | 3 | 8 | 6 | 10 | 3 |
| Hard coating liquid Physical properties | Transmittance | (%) | 90.7 | 78.7 | 40.2 | 52.6 | 80.6 |
| | Haze | (%) | 2.9 | 6.5 | 41.0 | 26.4 | 6.4 |
| | Viscosity | (mPa·s) | 2.7 | 2.2 | 3.5 | 2.0 | 2.0 |
| Hard coating liquid Physical properties | Elapsed days after preparation | (days) | 146 | 21 | 62 | 14 | 13 |
| | Transmittance | (%) | 89.1 | 77.9 | 8.8 | 40.8 | 78.6 |
| Confirmation of stability over time | Haze | (%) | 2.8 | 5.9 | 95.7 | 42.0 | 7.5 |
| | Viscosity | (mPa·s) | 2.4 | 2.2 | 11.8 | 2.2 | 3.1 |
| Lens having hard coatfilm | Transmittance | (%) | 90.1 | 90.1 | 89.8 | 90.1 | 90.2 |
| Physical properties | Haze | (%) | 0.2 | 0.2 | 1.1 | 2.2 | 2.0 |
| Adhesion | Visual observation | | Good | Good | Poor | Poor | Good |
| Scratch resistance | Visual observation | | Good | Good | Average | Poor | Good |
| Weatherability | Appearance | Visual observation | Good | Good | Poor | Poor | Good |
| | Adhesion | Visual observation | Good | Good | Poor | Poor | Good |

From the results in Table 1, it was found that by using zirconium element-containing metal oxides having a zeta potential (surface charge) of 30 mV or higher, lenses having a hard coating film of a low haze were obtained.

Then, it was confirmed that in Comparative Example 3, in which the zeta potential was lower than 30 mV, although the physical properties of the hard coating liquid right after the preparation were nearly in the same levels as in Examples 1 and 2, the stability over time was inferior; by contrast, by using zirconium element-containing metal oxides having a zeta potential of 30 mV or higher, the stability over time of the transparency and the viscosity was improved.

Further, it was confirmed that the compositions for coating of Examples 1 and 2 were excellent also in the adhesion to lenses and the lenses obtained by coating these compositions were excellent also in the scratch resistance and the weatherability.

## Claims

1. A composition for coating, comprising a zirconium element-containing metal oxide (A), and a silane compound (B),
wherein the zirconium element-containing metal oxide (A) has a zeta potential value as measured by the following method of 30 mV or higher:
<method of measuring the zeta potential>
a 10-mass% zirconium element-containing metal oxide (A) water dispersion is measured at room temperature (25°C) by a laser doppler electrophoresis method.

2. The composition for coating according to claim 1,
wherein the zirconium element-containing metal oxide (A) has an average primary particle diameter as measured by a dynamic light scattering method of 1 to 20 nm.

3. The composition for coating according to claim 1 or 2,
wherein the silane compound (B) is a hydrolyzate of a compound represented by the following formula (1):
R¹R²ₐSi(OR³)₃₋ₐ ... (1)
wherein R¹ represents an alkyl group having 1 to 3 carbon atoms, a phenyl group, a vinyl group, an organic group having an epoxy group, an organic group having a (meth)acrylic group, an organic group having an amino group, or an organic group having a mercapto group; R² represents an alkyl group having 1 or 2 carbon atoms; R³ are identical or different and each represent an alkyl group having 1 to 3 carbon atoms; and a is 0 or 1.

4. The composition for coating according to any one of claims 1 to 3,
wherein a content proportion of the zirconium element-containing metal oxide (A) is 4 to 25% by mass based on 100% by mass of the composition for coating.

5. The composition for coating according to any one of claims 1 to 4,
wherein a content proportion of the silane compound (B) is 30 to 260% by mol based on 100% by mol of the zirconium element-containing metal oxide (A).

6. The composition for coating according to any one of claims 1 to 5,
wherein the composition for coating is used in an application to a lens.

7. A lens, coated with the composition for coating according to any one of claims 1 to 6.
